# EUROPEAN PATENT APPLICATION

(11) **EP 2 020 814 A1**
(43) Date of publication of application: **04.02.2009**
(21) Application number: 08153606.2
(22) Date of filing: 28.03.2008
(51) Int. Cl.: H04N 5/00

(54) **Method for providing data broadcast and video apparatus using the same**

(30) Priority: 25.07.2007 KR 20070074733
(71) Applicant: SAMSUNG ELECTRONICS CO., LTD., Suwon-si, Gyeonggi-do 442-742 (KR)
(72) Inventor: Kim, Mun-seok, Gyeonggi-do (KR); Nam, Kyung-chul, Gyeonggi-do (KR)
(74) Representative: Rooney, John-Paul

(57) **Abstract**

A method for providing a data broadcast and a video apparatus using the method are provided. The method includes receiving data broadcasting files for data broadcasting services; storing the data broadcasting files; and generating a graphical user interface (GUI) for a user to access the stored data broadcasting files.

## Description

### BACKGROUND OF THE INVENTION

### 1. Field of the Invention

Apparatuses and methods consistent with the present invention relate to providing a data broadcast, and more particularly, to providing various types of information to a user.

### 2. Description of the Related Art

Broadcast stations provide users with various services through digital broadcasting. Digital broadcasting converts broadcast signals, such as audio, video or data signals, into digital signals. The converted signals are transmitted to and received from digital transmitting systems. Accordingly, it is possible to transmit not only sound and video but also data, and thus users may be provided with more various services through televisions (TVs).

Data broadcasting is one form of digital broadcasting. Data broadcasting enables multiplexing of code signals using television (TV) broadcasting in order to control a recipient's TV or to transmit various types of data. Accordingly, data broadcasting may be provided using only digital broadcast signals. When users view programs on TVs, data broadcasting provides users with weather reports, traffic reports, stock market information or other information on a sub-screen.

Such data broadcasting is provided only to a currently viewed channel and to broadcast providers, but users are not provided with information on data broadcasting. Accordingly, users may be provided with various types of text information or image information regarding data broadcasting only through Java applications provided by broadcast providers.

Therefore, if a user wishes to check desired information again, the user must manually record a program at the time when the desired information is broadcast or must schedule recording of such a program, increasing user inconvenience.

Since data broadcasting provides a variety of information, and is updated over time, users are not able to view all data broadcasts. Therefore, there is a need for a method which enables a user to personally check desired data broadcast information with greater ease.

### SUMMARY OF THE INVENTION

According to the present invention there is provided an apparatus and method as set forth in the appended claims. Other features of the invention will be apparent from the dependent claims, and the description which follows.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention aims to provide a method for providing a data broadcast and a video apparatus using the method which enable a user to access files required for data broadcasting services through a graphical user interface (GUI) so that a user may personally check desired data broadcast information with greater ease.

According to an aspect of the present invention, there is provided a method for providing a data broadcast, the method comprising receiving data broadcasting files which are required for data broadcasting services, storing the data broadcasting files, and generating a graphical user interface (GUI) so that a user may access the stored data broadcasting files.

The GUI may be a GUI in a file browser format, which makes a list of the data broadcasting files and displays the list.

The GUI may be a GUI capable of displaying whether the user has at least one of read, copy and export permissions for each data broadcasting file.

The method may further comprise, if a file for which the user has read permission is selected from among the data broadcasting files, displaying content of the selected file on a screen using a viewer.

The method may further comprise setting the permissions so that it is impossible for the user to select a file for which the user does not have read permission from among the data broadcasting files.

The storing may comprise storing the data broadcasting files received through a plurality of channels.

The storing may comprise storing the data broadcasting files received through channels selected by the user from among the plurality of channels.

The method may further comprise classifying the data broadcasting files according to channel information. The storing may comprise storing the data broadcasting files in folders corresponding to the channel information.

The channel information may comprise a physical transmission channel (PTC) ID.

The method may further comprise classifying the data broadcasting files according to application information. The storing may comprise storing the data broadcasting files in folders corresponding to the application information.

The application information may comprise a carousel ID.

The method may further comprise classifying the data broadcasting files according to file attribute information. The storing may comprise storing the data broadcasting files in folders corresponding to the file attribute information.

According to another aspect of the present invention, there is provided a video apparatus comprising a receiver which receives data broadcasting files which are required for data broadcasting services, a storage unit which stores the data broadcasting files, and a controller which controls a graphical user interface (GUI) to be generated so that a user may access the stored data broadcasting files.

The GUI may be a GUI in a file browser format, which makes a list of the data broadcasting files and displays the list.

The GUI may be a GUI capable of displaying whether the user has at least one of read, copy and export permissions for each data broadcasting file.

If a file for which the user has read permission is selected from among the data broadcasting files, the controller may control so that content of the selected file may be displayed on a screen using a viewer.

The controller may set the permissions so that it is impossible for the user to select a file for which the user does not have read permission from among the data broadcasting files.

The storing unit may store the data broadcasting files received through plurality of channels.

The storing unit may store the data broadcasting files received through channels selected by the user from among the plurality of channels.

The controller may classify the data broadcasting files according to channel information, and the storing unit may store the data broadcasting files in folders corresponding to the channel information.

The channel information may comprise a physical transmission channel (PTC) ID.

The controller may classify the data broadcasting files according to application information, and the storing unit may store the data broadcasting files in folders corresponding to the application information.

The application information may comprise a carousel ID.

The controller may classify the data broadcasting files according to file attribute information, and the storing unit may store the data broadcasting files in folders corresponding to the file attribute information.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram of a DTV to which the present invention is applicable;
FIG. 2 is a flowchart explaining a method for providing a data broadcast in order that a user accesses data broadcasting files through a GUI, according to an exemplary embodiment of the present invention;
FIG. 3 is a diagram showing a file browser according to an exemplary embodiment of the present invention;
FIG. 4 is a block diagram of a video apparatus according to another exemplary embodiment of the present invention; and
FIG. 5 is a flowchart explaining a method for providing a data broadcast according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

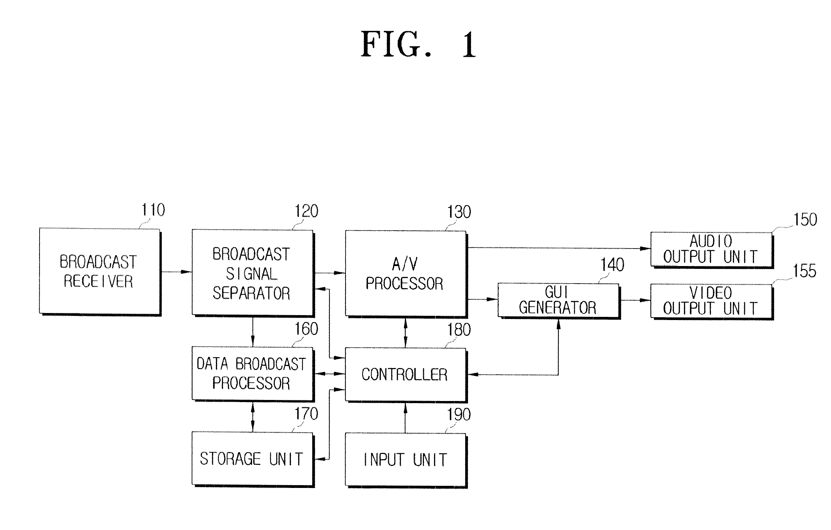

FIG. 1 is a block diagram of a digital television (DTV) to which the present invention is applicable. The DTV of FIG. 1 comprises a broadcast receiver 110, a broadcast signal separator 120, an audio/video (A/V) processor 130, a graphical user interface (GUI) generator 140, an audio output unit 150, a video output unit 155, a data broadcast processor 160, a storage unit 170, a controller 180 and an input unit 190.

The broadcast receiver 110 receives a broadcast from a broadcast station or a satellite via a cable or wirelessly, and demodulates the received broadcast. The broadcast receiver 110 may comprise a plurality of tuners (not shown) in order to simultaneously receive data broadcasts through a plurality of channels.

The broadcast signal separator 120 separates the broadcast output from the broadcast receiver 110 into a video signal, an audio signal, an additional information signal and a data broadcast signal, and outputs the separated signals. The video signal and audio signal are transmitted to the A/V processor 130, the additional information signal is transmitted to the controller 180, and the data broadcast signal is transmitted to the data broadcast processor 160.

The A/V processor 130 performs signal processing, such as video decoding, video scaling, audio decoding or the like, with respect to the broadcast output from the broadcast receiver 110. Additionally, the A/V processor 130 transmits the video signal and the audio signal to the GUI generator 140 and the audio output unit 150, respectively.

The GUI generator 140 generates a GUI to be shown on a display of the DTV, and adds the generated GUI to video output from the A/V processor 130.

The audio output unit 150 may output the audio signal transmitted from the A/V processor 130 through a speaker, or may output the audio signal to an external apparatus which is connected through an external output terminal.

The video output unit 155 may display the video including the GUI output from the GUI generator 140 on the display, or may output the video to an external apparatus (for example, an external TV) which is connected through an external output terminal.

The data broadcast processor 160 converts the data broadcast signal received from the broadcast signal separator 120 into a file containing predetermined information or predetermined functions. For example, the data broadcast signal may be converted into a file comprising weather reports, traffic reports and stock market information. Additionally, in order to provide a user with the above information, an application file may be received using the data broadcast signal.

For example, if an application for data services is received using the data broadcast signal, the data broadcast processor 160 may convert the data broadcast signal into an application file and transmit the converted file to the controller 180. The controller 180 may then launch the application, and accordingly data services of the corresponding application may be provided to a user.

The data broadcast processor 160 generates data broadcasting files which are required for data broadcasting services, and exports the generated files to the storage unit 170.

The storage unit 170 stores the data broadcasting files transmitted from the data broadcast processor 160. The storage unit 170 may simultaneously store data broadcasting files received through a plurality of channels, or may store data broadcasting files received via a channel selected by the user from among the plurality of channels.

The storage unit 170 may classify the data broadcasting files according to channel information or application information, and may then store the classified files. Here, the channel information may comprise a physical transmission channel (PTC) identification (ID), and the application information may comprise a carousel ID.

The PTC may be used to classify channels according to the physical frequency bandwidth. Each broadcast station employs different PTCs, and IDs are assigned to each PTC. For example, 14, 15, 16, 17 and 18 are assigned as PTC IDs to broadcast stations MBC, KBS1, SBS, KBS2 and EBS, respectively. The carousel IDs indicate identification numbers of applications provided through each channel.

The controller 180 controls the entire operation of the DTV. The controller 180 also controls the GUI generator 140 to generate a GUI so that a user may access the data broadcasting files stored in the storage unit 170. Here, the GUI may be a GUI in a file browser format which makes a list of data broadcasting files and displays the list. Additionally, the GUI may display whether the user has at least one of read, copy and export permissions for each data broadcasting file.

The controller 180 controls the storage unit 170 so that the data broadcasting files stored therein are classified according to the channel information or the application information. The controller 180 also controls the GUI generator 140 to display the files classified according to the channel information or the application information in a file browser. Additionally, the controller 180 controls the storage unit 170 so that the stored data broadcasting files are classified according to file attribute information, that is, according to whether the files are image, text or sound files.

The input unit 190 receives user control commands. For example, the user may select one file from among the data broadcasting files through the input unit 190. Additionally, the user may enter commands to launch or to copy the data broadcasting files using the input unit 190.

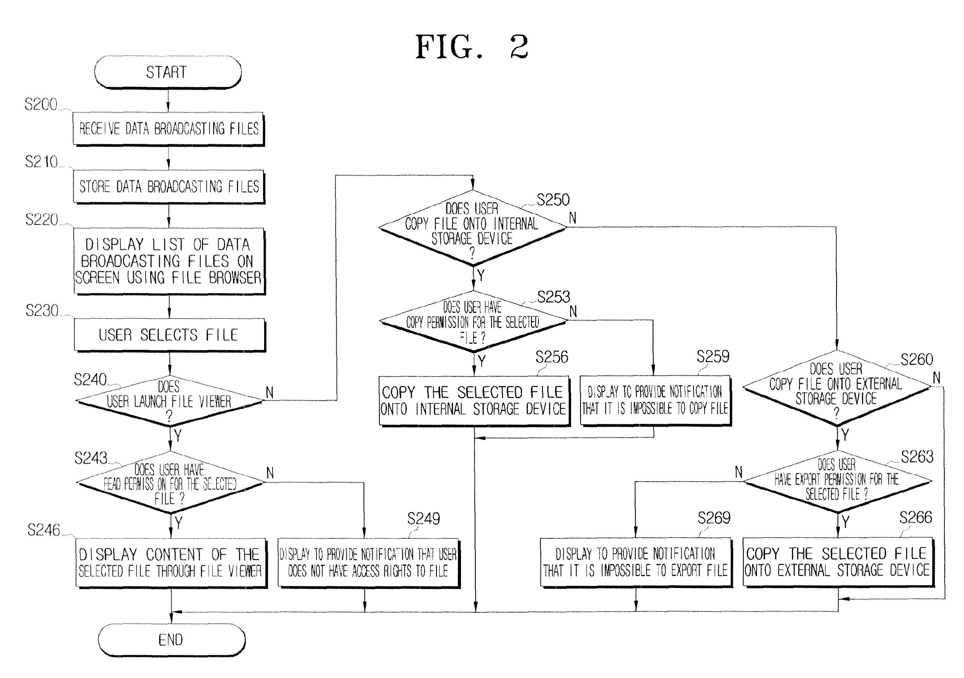

FIG. 2 is a flowchart explaining a method for providing a data broadcast so that a user may access data broadcasting files through a GUI, according to the exemplary embodiment of the present invention. In FIG. 2, the broadcast receiver 110 receives data broadcasting files (operation S200). The storage unit 170 stores the received data broadcasting files (operation S210).

In more detail, the broadcast receiver 110 receives a digital broadcast signal, and the broadcast signal separator 120 separates a data broadcast signal from the received digital broadcast signal and transmits the separated data broadcast signal to the data broadcast processor 160. The data broadcast processor 160 converts the data broadcast signal into data broadcasting files, and stores the converted files in the storage unit 170. The controller 180 then controls the storage unit 170 so that the data broadcasting files are classified according to the channel information or the application information and the classified files are stored.

Thereafter, the controller 180 causes a list of the data broadcasting files stored in the storage unit 170 to be displayed on a screen using the file browser (operation S220). The controller 180 controls the GUI generator 140 to generate a GUI in a file browser format which makes a list of the stored data broadcasting files and displays the list. The GUI generator 140 then adds the generated GUI to the video and transmits the video to the video output unit 155.

The user then selects a desired file through the file browser (operation S230). In this situation, the user may select the desired file by inputting a control command through the input unit 190.

If the user launches a file viewer for the selected file (operation S240-Y), the controller 180 may check whether there is permission to read the selected file (operation S243). If there is permission to read the selected file (operation S243-Y), the controller 180 may control the display of the DTV to display content of the selected file using the file viewer. The type of file viewer may be determined according to the type of file selected. For example, if a text file is selected, a text viewer may be used, and if an image file is selected, an image viewer may be user. Content of files may also be displayed using suitable viewers other than the text viewer or image viewer.

Alternatively, if there is no permission to read the selected file (operation S243-N), the controller 180 may control the display to provide notification that the user does not have access rights to the selected file (operation S249). Accordingly, the broadcast provider may restrict all permissions for the data broadcasting files which need to have protected copyrights, so it is possible to prevent files for which user access rights are restricted from being selected by the user.

If the user attempts to copy the data broadcasting file onto an internal storage device (operation S250-Y), the controller 180 may check whether there is permission to copy the selected file (operation S253). If there is permission to copy the selected file (operation S253-Y), the controller 180 may control the storage unit 170 so that the selected file may be copied onto the internal storage device (operation S256). Here, the internal storage device may be the storage unit 170, a memory or a hard disc drive (HDD) in the DTV, or other storage devices.

If there is not permission to copy the selected file (operation S253-N), the controller 180 may control the display to provide notification that it is impossible to copy the selected file (operation S259).

If the user attempts to copy the data broadcasting file onto an external storage device (operation S260-Y), the controller 180 may check whether there is permission to export the selected file (operation S263). If there is permission to export the selected file (operation S263-Y), the controller 180 may control the storage unit 170 so that the selected file may be copied onto the external storage device (operation S266). Here, the external storage device may be an external hard disc, a universal serial bus (USB) memory, a recordable digital versatile disc (DVDR) or other storage devices.

If there is no permission to export the selected file (operation S263-N), the controller 180 may control the display to provide notification that it is impossible to copy the selected file (operation S269).

Although there are three permissions to read, copy and export the data broadcasting file in this exemplary embodiment of the present invention, the data broadcasting file may include other permissions, that is, permissions to delete the data broadcasting file or to change a name of the data broadcasting file.

The method for providing a data broadcast and the video apparatus using the method in order that the user accesses the files required for data broadcast services through the GUI have been described above with reference to FIGS. 1 and 2, according to the exemplary embodiment of the present invention.

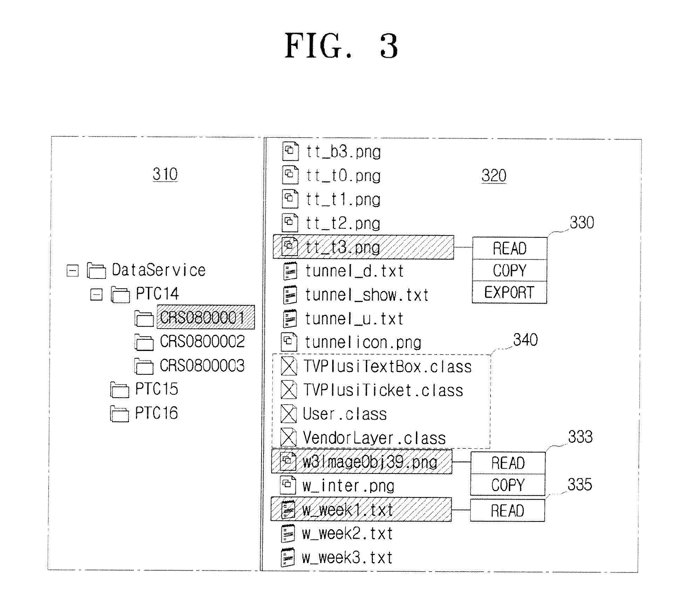

Hereinafter, the file browser format and the classification of data broadcasting files will be described in detail with reference to FIG. 3, according to an exemplary embodiment of the present invention. FIG. 3 is a diagram showing a file browser according to the exemplary embodiment of the present invention.

As shown in FIG. 3, the file browser is divided into two sections. A first section 310 displays folders which store the data broadcasting files. The data broadcasting files may be classified according to the channel information or the application information. The channel information comprises the PTC ID, and the application comprises the carousel ID.

Accordingly, a name such as PTC ID or carousel ID may be assigned to the folders generated by classifying the data broadcasting files. Each folder may store data broadcasting files associated with a channel and an application corresponding to the name of the folder.

For example, the data broadcasting files may be classified according to the channel information such as PTC 14, PTC 15 and PTC 16, as shown in FIG. 3. Here, PTC 14, PTC 15 and PTC 16 as PTC IDs represent broadcast stations MBC, KBS1 and SBS, respectively.

Additionally, the data broadcasting files may be classified according to the application information after being classified into channel categories. As shown in FIG. 3, CRS0800001, CRS0800002 and CRS0800003 of the first section 310 are used as carousel IDs for applications. Each folder of applications stores data broadcasting files which are provided by the corresponding applications.

A second section 320 displays a list of files stored in the selected folder. As shown in FIG. 3, if CRS0800001 is selected from among the folders of the first section 310, a list of data broadcasting files provided by an application to which CRS0800001 is assigned as a carousel ID may be displayed on the second section 320.

If the user selects "tt_t3.png", a first permission menu 330 for the selected file may appear. Through the first permission menu 330, the user may set read, copy and export permissions for "tt_t3.png", so that the user may read, copy and export "tt_t3.png".

If the user selects "w3image0bj39.png", a second permission menu 333 may be displayed. The second permission menu 333 contains permissions to read and copy the selected file, so the user can only read and copy "w3image0bj39.png" and cannot export "w3image0bj39.png".

Additionally, if the user selects "w_week1.txt", a third permission menu 335 may be displayed. The third permission menu 335 contains permissions to read the selected file, so the user can only read "w_week1.txt" and cannot copy or export "w_week1.txt".

As described above, if the user selects a predetermined file, the controller 180 may control the display so that the permission menu of the selected data broadcasting file may be provided to the user.

The controller 180 may set the permissions so that it is impossible for the user to select a data broadcasting file for which user access rights are restricted in order to protect copyright. For example, "X" marks may be added to inaccessible files 340, so it is possible to distinguish the inaccessible files 340 from other accessible files. In this situation, it is impossible to read, copy and export the inaccessible files 340, and the controller 180 may set the permissions so that the user cannot select the inaccessible files 340.

The file browser which displays the list of data broadcasting files has been described in detail with reference to FIG. 3.

In this exemplary embodiment of the present invention, the file browser is divided into the first and second sections, but the user may access data broadcasting files using other file browsers with various formats. For example, a file browser built in the DTV may be used to display the list of data broadcasting files.

Additionally, although the video apparatus to which the present invention is applicable is a DTV, the present invention is applicable to other video apparatuses. The video apparatuses to which the present invention is applicable may include a set-top box or a digital multimedia broadcast (DMB) receiving apparatus, or various portable devices capable of receiving broadcasts.

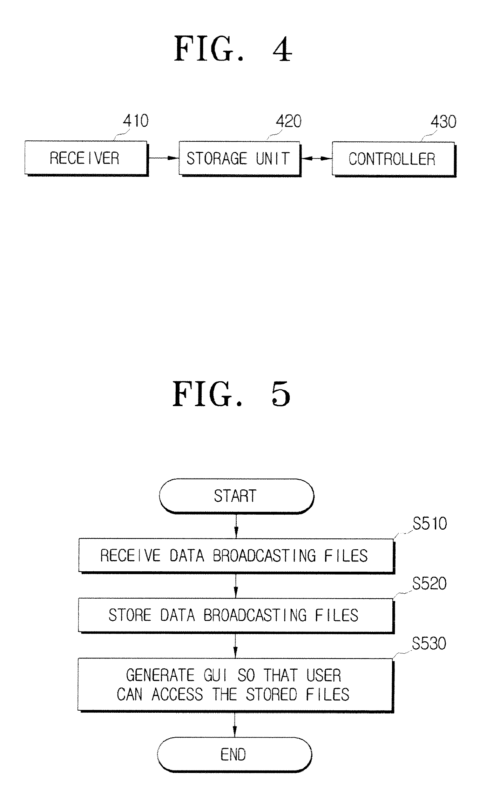

Hereinafter, a video apparatus and a method for providing a data broadcast according to another exemplary embodiment of the present invention will be described in detail with reference to FIGS. 4 and 5.

FIG. 4 is a block diagram of a video apparatus according to the other exemplary embodiment of the present invention. The video apparatus of FIG. 4 comprises a receiver 410, a storage unit 420 and a controller 430.

The receiver 410 receives data broadcasting files which are required for data broadcasting services. The storage unit 420 stores the data broadcasting files. The controller 430 generates a GUI so that a user may access the stored data broadcasting files.

FIG. 5 is a flowchart explaining a method for providing a data broadcast according to the other exemplary embodiment of the present invention. In FIG. 5, the video apparatus receives data broadcasting files (operation S510). The video apparatus then stores the data broadcasting files (operation S520). The video apparatus generates a GUI so that a user may access the stored data broadcasting files (operation S530).

Therefore, it is possible to provide the user with the method for providing a data broadcast and the video apparatus using the method.

As described above, according to the exemplary embodiments of the present invention, a user accesses files required for data broadcasting services through a GUI, so the user may personally check information on a desired data broadcast with greater ease.

Additionally, data broadcasting files received through a plurality of channels may be simultaneously stored, and thus the user may use a variety of data broadcast information for all the channels. Accordingly, it is possible to check information regarding data broadcasts which are broadcast via different channels at the same time using the stored data broadcasting files.

Furthermore, data broadcasting files may be stored in a separate storage device, and accordingly the user may store and hold a desired data broadcasting file in a separate storage device.

Moreover, the data broadcast provider may give permissions for the data broadcasting files, and thus it is possible to restrict user access so that the user cannot access files for which problems of copyright may arise.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a data broadcast, the method comprising:
receiving data broadcasting files for data broadcasting services;
storing the data broadcasting files; and
generating a graphical user interface (GUI) for a user to access the stored data broadcasting files.

2. The method as claimed in claim 1, wherein the GUI is a GUI in a file browser format, which makes a list of the data broadcasting files and displays the list.

3. The method as claimed in claim 1, wherein the GUI is a GUI operable to display whether the user has at least one of read permission, copy permission and export permission for each of the data broadcasting files.

4. The method as claimed in claim 3, further comprising:
if a data broadcasting file for which the user has the read permission is selected from among the data broadcasting files, displaying content of the selected data broadcasting file on a screen using a viewer.

5. The method as claimed in claim 3, further comprising:
setting the read permission, copy permission and export permission so that it is impossible for the user to select a data broadcasting file for which the user does not have read permission from among the data broadcasting files.

6. The method as claimed in claim 1, wherein the storing comprises storing the data broadcasting files received through a plurality of channels.

7. The method as claimed in claim 6, wherein the storing comprises storing the data broadcasting files received through channels selected by the user from among the plurality of channels.

8. The method as claimed in claim 1, further comprising:
classifying the data broadcasting files according to channel information,
wherein the storing comprises storing the data broadcasting files in folders corresponding to the channel information.

9. The method as claimed in claim 8, wherein the channel information comprises a physical transmission channel (PTC) ID.

10. The method as claimed in claim 1, further comprising:
classifying the data broadcasting files according to application information,
wherein the storing comprises storing the data broadcasting files in folders corresponding to the application information.

11. The method as claimed in claim 10, wherein the application information comprises a carousel ID.

12. The method as claimed in claim 1, further comprising:
classifying the data broadcasting files according to file attribute information,
wherein the storing comprises storing the data broadcasting files in folders corresponding to the file attribute information.

13. A video apparatus comprising:
a receiver (110) which receives data broadcasting files for data broadcasting services;
a storage unit (170) which stores the data broadcasting files; and
a controller (180) which controls a graphical user interface (GUI) for a user to access the stored data broadcasting files.

14. The video apparatus as claimed in claim 13, wherein the GUI is a GUI in a file browser format, which makes a list of the data broadcasting files and displays the list.

15. The video apparatus as claimed in claim 13, wherein the GUI is operable to display whether the user has at least one of read permission, copy permission and export permission for each of the data broadcasting files.

16. The video apparatus as claimed in claim 15, wherein, if a data broadcasting file for which the user has the read permission is selected from among the data broadcasting files, the controller (180) controls so that content of the selected data broadcasting file is displayed on a screen using a viewer.

17. The video apparatus as claimed in claim 15, wherein the controller (180) sets the read permission, the copy permission and the export permission so that it is impossible for the user to select a data broadcasting file for which the user does not have a read permission from among the data broadcasting files.

18. The video apparatus as claimed in claim 13, wherein the storing unit stores the data broadcasting files received through a plurality of channels.

19. The video apparatus as claimed in claim 18, wherein the storing unit stores the data broadcasting files received through channels selected by the user from among the plurality of channels.

20. The video apparatus as claimed in claim 13, wherein the controller (180) classifies the data broadcasting files according to channel information, and
the storing unit stores the data broadcasting files in folders corresponding to the channel information.

21. The video apparatus as claimed in claim 20, wherein the channel information comprises a physical transmission channel (PTC) ID.

22. The video apparatus as claimed in claim 13, wherein the controller (180) classifies the data broadcasting files according to application information, and
the storing unit stores the data broadcasting files in folders corresponding to the application information.

23. The video apparatus as claimed in claim 22, wherein the application information comprises a carousel ID.

24. The video apparatus as claimed in claim 13, wherein the controller (180) classifies the data broadcasting files according to file attribute information, and
the storing unit stores the data broadcasting files in folders corresponding to the file attribute information.

25. The method as claimed in claim 1, wherein the data broadcasting files comprise at least one of weather reports, traffic reports and stock market information.

26. The method as claimed in claim 3, wherein if a file for which the user has copy permission is selected from among the data broadcasting files, copying the selected file to an internal storage device.

27. The method as claimed in claim 3, wherein if a file for which the user has extraction permission is selected from among the data broadcasting files, copying the selected file to an external storage device.

28. The method as claimed in claim 15, wherein if a file for which the user has copy permission is selected from among the data broadcasting files, copying the selected file to an internal storage device.

29. The method as claimed in claim 15, wherein if a file for which the user has extraction permission is selected from among the data broadcasting files, copying the selected file to an external storage device.
